# EUROPEAN PATENT SPECIFICATION

(11) **EP 3 482 640 B1**
(45) Date of publication and mention of the grant of the patent: **08.07.2026**
(21) Application number: 18205181.3
(22) Date of filing: 08.11.2018
(51) Int. Cl.: A23L 2/52, A23L 2/56, C12G 3/025, C12C 12/04, C12G 3/055, C12G 3/026

(54) **CANNABIS INFUSED BEVERAGES**
MIT CANNABIS VERSETZTE GETRÄNKE
BOISSONS INFUSÉES DE CANNABIS

(30) Priority: 10.11.2017 US 201762584489 P
(43) Date of publication of application: 15.05.2019
(73) Proprietor: JL Beverage Co., Laveen, AZ 85339 (US)
(72) Inventor: FORSYTHE, Andrew Clayton, Torrance, CA California 90505 (US)
(74) Representative: AWA Denmark A/S

(56) References cited:
- WO-A1-2015/191728
- WO-A1-2019/010576
- CN-A- 105 886 302
- US-A1- 2014 044 807
- US-A1- 2015 182 455
- US-A1- 2016 243 177

## Description

### CROSS-REFERENCE TO RELATED APPLICATIONS

### FIELD

The present disclosure relates to beverages infused with cannabis.

### BACKGROUND

Many jurisdictions within the United States and worldwide are moving from prohibition of cannabis to regulation of cannabis. Cannabis is being separately regulated for medical or adult use markets. Medical, general health, and other benefits of cannabis are increasingly recognized. The variety of products being prepared that include cannabis is expanding.

Dried cannabis is considered by many to be the standard form of cannabis and is suitable for smoking or vaporizing. However, cannabis products other than dried cannabis flower have gained increasing market. Cannabis extract may be formulated into a wide variety of products that are suitable for eating, drinking, topical application, transmucosal absorption or vaporizing.

Cannabis extract including phytocannabinoids, terpenoids, phenylpropanoids and other compounds may be extracted from cannabis plant matter. Cannabis extract may be extracted from cannabis plant matter by a variety of techniques using suitable solvents (e.g. CO₂, alcohols, hydrocarbons, etc.), or through solventless methods (e.g. pressing, etc.).

United States Publication No. 2015/182455 A1 to Llamas relates to a composition comprising about 0.001 % to about 1 % by weight of phytocannabinoids or derivatives thereof, based on the total weight of the mixture, and an alcohol, with water and other compositions as the balance of the weight. Llamas also relates to an alcoholic beverage containing between about 0.001 % to about 1 % (wt/wt) phytocannabinoids and derivatives thereof, between about 2% to about 45% (wt/wt) of alcohol, with water, fermentation byproducts, emulsifiers, and flavor enhancers composing the balance of the total weight. Llamas also discloses methods to prepare these compositions, and methods of use to minimize adverse effects from alcohol consumption. Furthermore, WO 2015/191728 A1, US 2014/044807 A1, CN 105886302 A and US 2016/243177 A1 all disclose a method for preparing a cannabis infused non-alcoholic beverage with good taste.

### SUMMARY

The invention is defined by the subject matter of the independent claims. Particular embodiments of the invention are set out in the dependent claims. Beverages infused with cannabis are popular in jurisdictions with regulations allowing these products. The lipid solubility of phytocannabinoids, terpenoids, phenylpropanoids and other compounds found in cannabis plant matter is an obstacle to creating a user-friendly cannabis infused beverage. A variety of emulsions and other approaches to increasing solubility of these compounds are applied to mitigate this problem. The flavor of cannabis is also considered to be a negative in many markets. Strong flavors, such as are found in soft drinks, artificial fruit beverages or iced tea, are often used to cover the flavor of cannabis and in some cases of a carrier oil or emulsion used in the cannabis. Outside of a medical context, psychoactive and other cannabis products are generally intended for adults, and strong, often sweet, flavors used to mask the flavor of cannabis in these beverages may be unappealing to adults. It is therefore desirable to prepare cannabis infused beverages with a flavor that has a broader appeal than the strong and often sweet flavor used in many infused beverages. It is an object of the present disclosure to obviate or mitigate at least one disadvantage of previous cannabis infused beverages.

Alcoholic beverages are common in social situations and are enjoyed by many for the flavor and experience of drinking the beverage, and also for the psychoactive effects of alcohol. Cannabis is also enjoyed by many and is common in social situations. Combining cannabis and alcohol can have unpredictable effects and in many cases may result in a greater impairment, loss of control or other disadvantage than either cannabis or alcohol alone. As cannabis becomes regulated for adult use and for medical purposes, regulations are unlikely to allow sale of products that include both cannabis and alcohol, and such products may in any event not be popular with many customer demographics.

Many people avoid mixing cannabis and alcohol, but many cannabis users also drink alcoholic beverages and are comfortable with the flavor and general feel of alcoholic beverages. Alcoholic beverages, such as beer, wine, spirits and others, are brewed, fermented or distilled. During the processing of brewing, fermenting or distilling, alcoholic beverages acquire a flavor and texture that is integral to the user experience associated with alcoholic beverages.

An alcoholic beverage is dealcoholized applying the spinning cone process to alcoholic beverage for removing alcohol from the alcoholic beverage providing a dealcoholized beverage. The dealcoholized beverage is combined with a cannabis preparation, providing a cannabis infused beverage with flavor and texture characteristics of the dealcoholized beverage that was combined with the cannabis preparation. The flavor of the alcoholic beverage provides a base that may mask the flavor of the cannabis preparation, or that may combine with the flavor of the cannabis preparation. The cannabis preparation may include phytocannabinoids and terpenoids, phenylpropanoids, or other chemicals found in *Cannabis sativa* trichomes. The cannabis preparation may include multiple separate preparations. A phytocannabinoid preparation in a water-miscible emulsion or other water-compatible form may be added to the dealcoholized beverage. The phytocannabinoid preparation may include one or more phytocannabinoids, and may be primarily an abundant phytocannabinoid, such as delta-9-tetrahydrocannabinol **("THC")** or cannabidiol **("CBD").** The phytocannabinoid preparation may be added separately from an entourage preparation. The entourage preparation may include less abundant phytocannabinoids, terpenoids, phenylpropanoids, or other chemicals found in *Cannabis sativa* trichomes other than phytocannabinoids. The entourage preparation may be a cannabis extract, a cannabis essential oil or a hydrosol of cannabis. The phytocannabinoid preparation and the entourage preparation may contribute to the aroma, flavor and effects of the cannabis infused beverage. In some cases, the phytocannabinoid preparation may contribute primarily to the effects of the beverage, such as when introducing a THC distillate, a CBD distillate or both, as the phytocannabinoid preparation, and an entourage preparation may be added to contribute to aroma and flavor, while also having some impact on the effects of the beverage.

Water, fruit juice, coffee, tea, or other base beverages may be combined with a phytocannabinoid preparation and a cannabis hydrosol to provide a cannabis infused beverage. The phytocannabinoid preparation may include phytocannabinoids and terpenoids, phenylpropanoids, or other chemicals found in *C*. *sativa* trichomes. The phytocannabinoid preparation may be in a water-miscible emulsion or other water-compatible form. The cannabis hydrosol may include some phytocannabinoids, terpenoids, phenylpropanoids and other volatile chemicals that evolve from *C*. *sativa* trichomes when cannabis plant matter is steamed, boiled or otherwise exposed to steam, resulting in a cannabis infused steam. The cannabis infused steam condenses into an essential oil and a hydrosol. The essential oil is a concentrated hydrophobic phase and the hydrosol is a dilute aqueous phase. The cannabis hydrosol may include a similar profile of phytocannabinoids, terpenoids and phenylpropanoids as the cannabis plant matter that was exposed to the steam, and the profile may be skewed toward the more volatile chemicals and the more water-soluble chemicals found in the plant matter. The cannabis hydrosol may contribute to the aroma, flavor and effect of the beverage.

In a first aspect, herein provided are cannabis infused beverages, and a method and system for preparing the cannabis infused beverages. A dealcoholized cannabis infused beverage includes a dealcoholized beverage applying the spinning cone process to the alcoholic beverage for removing alcohol from the alcoholic beverage and a phytocannabinoid preparation. An entourage preparation including terpenoids may be included in the cannabis infused beverage. The entourage preparation may include a cannabis hydrosol. A non-alcoholic cannabis infused beverage may include a phytocannabinoid preparation and a cannabis hydrosol. The non-alcoholic cannabis infused beverage may be prepared from water, fruit juice, coffee, tea, or other base beverages

In a further aspect, herein provided is a method of preparing a cannabis infused beverage comprising: providing a dealcoholized beverage; and applying the spinning cone process to the alcoholic beverage for removing alcohol from the alcoholic beverage providing a phytocannabinoid preparation; and introducing the phytocannabinoid preparation into the dealcoholized beverage to provide a cannabis infused beverage.

The removal of alcohol from the alcoholic beverage comprises applying a spinning cone process to the alcoholic beverage. In some embodiments, the method includes recovering a processed alcoholic beverage from the spinning cone process; applying the spinning cone process to the processed alcoholic beverage, resulting in flavor fraction comprising flavonoids; and introducing the flavor fraction into the cannabis infused beverage. In some embodiments, introducing the flavor fraction into the cannabis infused beverage comprises introducing the flavor fraction to the dealcoholized beverage.

In some embodiments, the phytocannabinoid preparation comprises a phytocannabinoid distillate.

In some embodiments, the phytocannabinoid preparation comprises terpenoids. In some embodiments, the phytocannabinoid preparation comprises phytocannabinoids and terpenoids extracted from a single plant source. In some embodiments, the single plant source comprises plant matter from a single clonal strain or stable variety of *Cannabis sativa.* In some embodiments, the phytocannabinoid preparation comprises a cannabis hydrosol. In some embodiments, the cannabis hydrosol is prepared according to a method comprising: providing cannabis plant matter; exposing the cannabis plant matter to steam, resulting in infused steam; condensing the infused steam, resulting in cannabis essential oil and cannabis hydrosol; and recovering the cannabis hydrosol. In some embodiments, exposing the cannabis plant matter to the steam comprises locating the cannabis plant matter in a flow path of the steam. In some embodiments, exposing the cannabis plant matter to the steam comprises boiling the cannabis plant matter in water.

In some embodiments, the phytocannabinoid preparation comprises an emulsion.

In some embodiments, the method includes introducing an entourage preparation into the dealcoholized beverage to provide the cannabis infused beverage, the entourage preparation comprising terpenoids. In some embodiments, the entourage preparation comprises an extract from *Cannabis sativa.* In some embodiments, the entourage preparation comprises a cannabis essential oil. In some embodiments, the entourage preparation comprises a cannabis hydrosol. In some embodiments, the cannabis hydrosol is prepared according to a method comprising: providing cannabis plant matter; exposing the cannabis plant matter to steam, resulting in infused steam; condensing the infused steam, resulting in cannabis essential oil and cannabis hydrosol; and recovering the cannabis hydrosol. In some embodiments, exposing the cannabis plant matter to the steam comprises locating the cannabis plant matter in a flow path of the steam. In some embodiments, exposing the cannabis plant matter to the steam comprises boiling the cannabis plant matter in water. In some embodiments, the terpenoids are sourced from a plant other than from *Cannabis sativa.* In some embodiments, the terpenoids are synthetic.

In some embodiments, the method comprises adding tartaric acid or malic acid to the cannabis infused beverage for adjusting the flavor or pH of the dealcoholized cannabis infused beverage.

In some embodiments, the method comprises adding tartaric acid or malic acid to the dealcoholized beverage for adjusting the flavor or pH of the dealcoholized cannabis infused beverage.

In a further aspect, herein provided is a method of preparing a cannabis infused beverage comprising: providing a beverage; providing a cannabis hydrosol preparation; providing a phytocannabinoid preparation; introducing the phytocannabinoid preparation and the cannabis hydrosol into the beverage to provide a cannabis infused beverage.

The removal of alcohol from the alcoholic beverage comprises applying a spinning cone process to the alcoholic beverage. In some embodiments, the method includes recovering a processed alcoholic beverage from the spinning cone process; applying the spinning cone process to the processed alcoholic beverage, resulting in flavor fraction comprising flavonoids; and introducing the flavor fraction into the cannabis infused beverage. In some embodiments, introducing the flavor fraction into the cannabis infused beverage comprises introducing the flavor fraction to the dealcoholized beverage.

In some embodiments, the method further comprises adding tartaric acid or malic acid to the cannabis infused beverage for adjusting the flavor or pH of the dealcoholized cannabis infused beverage.

In some embodiments, the method comprises adding tartaric acid or malic acid to the dealcoholized beverage for adjusting the flavor or pH of the dealcoholized cannabis infused beverage.

In some embodiments, providing the cannabis hydrosol preparation comprises: providing cannabis plant matter; exposing the cannabis plant matter to steam, resulting in infused steam; condensing the infused steam, resulting in cannabis essential oil and cannabis hydrosol; recovering the cannabis hydrosol; and preparing the cannabis hydrosol preparation from the cannabis hydrosol. In some embodiments, exposing the cannabis plant matter to the steam comprises locating the cannabis plant matter in a flow path of the steam. In some embodiments, exposing the cannabis plant matter to the steam comprises boiling the cannabis plant matter in water.

In some embodiments, the phytocannabinoid preparation comprises a phytocannabinoid distillate.

In some embodiments, the phytocannabinoid preparation comprises terpenoids. In some embodiments, the phytocannabinoid preparation comprises phytocannabinoids and terpenoids extracted from a single plant source. In some embodiments, the single plant source comprises plant matter from a single clonal strain or stable variety of *Cannabis sativa.*

In some embodiments, the phytocannabinoid preparation comprises an emulsion.

In some embodiments, the method includes introducing an entourage into the dealcoholized beverage to provide the cannabis infused beverage, the entourage preparation comprising terpenoids. In some embodiments, the entourage preparation comprises a cannabis essential oil. In some embodiments, the terpenoids are sourced from a plant other than from *Cannabis sativa.* In some embodiments, the terpenoids are synthetic.

In a further aspect, herein provided is a cannabis infused beverage prepared according any method described in the claims.

In a further aspect, herein provided is a system for preparing cannabis infused beverage according to any method described in the claims.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached figures, in which reference numerals sharing a common final two digits refer to corresponding features across figures (e.g. the phytocannabinoid preparation 30, 130, 230, 330, 430, 530, 630, etc.):
Fig. 1 is a schematic of a method of preparing a dealcoholized cannabis infused beverage; A reference figure, not within the scope of the invention.
Fig. 2 is a schematic of a method of preparing a dealcoholized cannabis infused beverage;
Fig. 3 is a schematic of a method of preparing a dealcoholized cannabis infused beverage;
Fig. 4 is a schematic of a method of preparing a dealcoholized cannabis infused beverage; (a reference figure, not within the scope of the invention)
Fig. 5 is a schematic of a method of preparing a dealcoholized cannabis infused beverage; (a reference figure, not within the scope of the invention)
Fig. 6 is a schematic of a method of preparing a non-alcoholic cannabis infused beverage; (a reference figure, not within the scope of the invention) and
Fig. 7 is a schematic of a method of preparing a non-alcoholic cannabis infused beverage.

### DETAILED DESCRIPTION

Generally, the present disclosure provides cannabis infused beverages, and methods and systems for preparing the beverages according to the claims. The cannabis infused beverages may provide beverages suited to the palates of adults that are familiar and comfortable with the flavor and aroma of alcoholic beverages, the flavor and aroma of cannabis, or both. The cannabis infused beverages may include a dealcoholized beverage infused with a phytocannabinoid preparation. The dealcoholized beverages may also be infused with an entourage preparation that includes terpenoids and may include phytocannabinoids, phenylpropanoids or other compounds that contribute to flavor, aroma and the effect of the phytocannabinoids in the phytocannabinoid preparation. The cannabis infused beverages may also include any beverage type infused with both a phytocannabinoid preparation and a cannabis hydrosol. Each of these approaches may provide a cannabis infused beverage with a flavor that is appealing to an adult audience that is familiar with alcoholic beverages, the flavor of cannabis or both.

The infused beverages may include terpenoids, phenylpropanoids or other chemicals biosynthesized in *Cannabis sativa.* The phytocannabinoid preparation may include terpenoids, phenylpropanoids or other chemicals biosynthesized in *C*. *sativa.* A separate entourage preparation including some phytocannabinoids, terpenoids, phenylpropanoids or other chemicals biosynthesized in *C*. *sativa* may be added in addition to the phytocannabinoid preparation. The phytocannabinoid preparation and the entourage preparation may include an emulsion or other preparation to allow miscibility with the aqueous beverage. The entourage preparation may include a cannabis essential oil, a cannabis hydrosol, a cannabis extract, a terpenoid preparation sourced from plants other than *C*. *sativa,* a terpenoid preparation including synthetic terpenoids or any combination thereof. The terpenoid preparation sourced from plants other than *C. sativa,* a terpenoid preparation including synthetic terpenoids may also include phenylpropanoids or other chemicals found in combination with terpenoids, and that may also contribute to the flavor, aroma or effects of the beverage.

As used herein, *C*. *sativa* refers to a single plant species that includes at least three major subspecies, which are *C*. *sativa sativa, C*. *sativa indica,* and *C*. *sativa ruderalis,* and includes all landraces, hybrids or other varieties, cultivars or clonal strains defined by or derived from any of these subspecies, including any industrial hemp or drug-type varieties, cultivars or clonal strains. Cannabis is a blanket term for dried or fresh cannabis flowers, leaves or other plant biomass including trichomes, and for any products prepared from extracts of *C*. *sativa* or that include phytocannabinoids identical to naturally occurring phytocannabinoids regardless of source.

As used herein, "phytocannabinoid" or "phytocannabinoids" may include any phytocannabinoid regardless of source, which may commonly include extraction from *C*. *sativa*, biosynthesis in microorganisms, or chemical synthesis. Phytocannabinoids include decarboxylated phytocannabinoids such as delta-9-tetrahydrocannabinol ("**THC**"), cannabidiol **("CBD"),** cannabichromene **("CBC"),** cannabielsoin **("CBE"),** delta-8-tetrahydrocannabinol **("Δ8-THC"),** iso-tetrahydrocannabinol **("iso-THC"),** cannabicyclol **("CBL"),** cannabicitran **("CBT"),** any acid form (i.e. not decarboxylated), any varin side chain form (e.g. THCv, CBDv, etc.), any chemically modified phytocannabinoid (e.g. glycosylation to increase water solubility, acetylation, etc.), any other phytocannabinoid produced by any variety of *C*. *sativa* or that are known degradation products that have psychoactive or other properties (e.g. 11-hydroxy-THC, cannabinol **("CBN"),** etc.).

Wine, beer, spirits and other alcoholic beverages that are brewed, fermented or distilled have flavors and other properties that may be appealing to consumers, other than the inclusion of ethanol in these products. The beverage may be prepared by brewing, fermenting or distilling an alcoholic beverage. The alcoholic beverage may be dealcoholized to produce a dealcoholized beverage that retains the flavor and other properties of the alcoholic beverage. The dealcoholized beverage may be infused with a phytocannabinoid preparation including phytocannabinoids to provide a dealcoholized cannabis infused beverage. The dealcoholized beverage may be infused with an entourage preparation, which may include terpenoids, either before, after or concomitant with infusion of the phytocannabinoid preparation. The cannabis infused beverage may then then be prepared for bottling and individual sale.

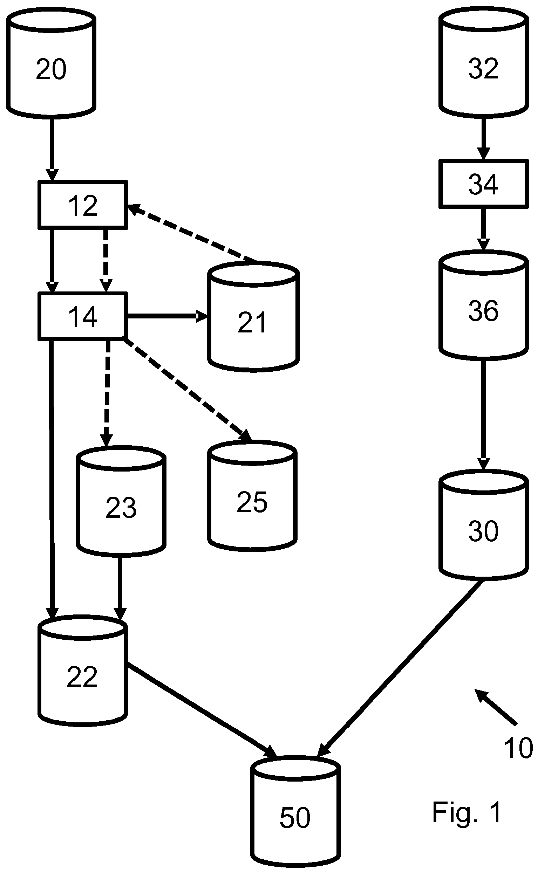

Fig. 1 (a reference figure, not within the scope of the invention) shows a schematic of a system 10 for applying a method of preparing a dealcoholized cannabis infused beverage 50. An alcoholic beverage 20 may be dealcoholized, providing a dealcoholized beverage 22. The alcoholic beverage 20 may be a wine, beer or spirit. The alcoholic beverage 20 may include between about 3.5% alcohol and 7.0% alcohol for beer or malt liquors, about 10 and 14% alcohol in wines, and about 40% alcohol in spirits. The alcoholic beverage 20 may be passed through a reverse osmosis filter 12 and a vertical still 14 (shown in solid lines), resulting in precipitate 21 and the dealcoholized beverage 22. The precipitate 21 includes primarily ethanol and a flavonoids, terpenoids and other components of the alcoholic beverage 20, and which contribute to the aroma and flavor of the alcoholic beverage 20. The precipitate 21 may be passed through the reverse osmosis filter 12 and the vertical still 14 to recover some of the flavonoids, terpenoids and other components of the alcoholic beverage 20 that were captured in the precipitate 21 and that contribute to the flavor and aroma of the alcoholic beverage 20. Applying the reverse osmosis filter 12 and the vertical still 14 to the precipitate 21 (shown in dashed lines) results in recaptured material 23 and a purified precipitate 25. The recaptured material 23 may include flavors and terpenoids that were captured in the precipitate 21. The purified precipitate 25 may be recovered for use as a source of ethanol or may be discarded.

The dealcoholized beverage 22 may be combined with a phytocannabinoid preparation 30, which includes phytocannabinoids, resulting in the dealcoholized cannabis infused beverage 50. The phytocannabinoid preparation 30 may include an extract, distillate, tincture, concentrate or other preparation of *C*. *sativa* sourced, biosynthetic or synthetic phytocannabinoids. The phytocannabinoid preparation 30 may include emulsifiers, surfactants or other additives to increase water solubility of phytocannabinoids. The phytocannabinoid preparation 30 may include phytocannabinoids that have been chemically modified, such as through glycosylation, to increase water solubility. The phytocannabinoid preparation 30 may include a liquid soluble phytocannabinoid preparation emulsified with gum acacia by combining a *C*. *sativa* extract, gum acacia, and water.

A typical microemulsion precursor (before the addition to a beverage) formulation may include 10 % *C*. *sativa* extract or other source of phytocannabinoids, 30 % carrier oil (e.g. Miglyol 812, etc.), and about 60% surfactants. In one example, the surfactants may include oleic acid (15%), Tween 80 (33.75 %) and Cremophor RH 40 (11.25 %).

A typical liposome precursor (before the addition to a beverage) formulation may include may include 20 % *C*. *sativa* extract or other source of phytocannabinoids, 75 % surfactants (e.g., lecithin phospholipids, etc.) and 5 % encapsulant (e.g., sodium alginate, etc.).

A typical nanoemulsion concentrate (with some water, but before the addition to a beverage) formulation may include 5 % *C*. *sativa* extract or other source of phytocannabinoids, 7 % carrier oil (e.g., olive oil, etc.), 2 % surfactant (e.g., Quillaja saponin, etc.) and 85.4% water.

Including the phytocannabinoid preparation 30 in the dealcoholized beverage 22 provides access to the medical and other benefits of the phytocannabinoids in the phytocannabinoid preparation 30 in a dosage form that has a similar taste, aroma, texture and other properties of the dealcoholized beverage 22 and as a result, of the alcoholic beverage 20 that was dealcoholized, other than the effects resulting from ethanol.

Infusing the dealcoholized beverage 22 with the phytocannabinoid preparation 30 provides a cannabis infused beverage 10 with flavor and texture characteristics of the dealcoholized beverage 22 that was combined with the phytocannabinoid preparation 30. The flavor of the alcoholic beverage 22 provides a base that may mask the flavor of the phytocannabinoid preparation 30, or that may combine with the flavor of the phytocannabinoid preparation 30. The phytocannabinoid preparation 30 may include phytocannabinoids and terpenoids, phenylpropanoids, or other chemicals found in *C*. *sativa* trichomes and may be extracted from *C*. *sativa* plant matter 32 using an extraction unit 34, resulting in a cannabis extract 36 that is used to prepare the phytocannabinoid preparation 30. The cannabis extract 36 may prepared into the phytocannabinoid preparation 30 by distillation, purification, winterization or other approaches. The phytocannabinoid preparation 30 may be added in a water-miscible emulsion or other water-compatible form.

A variety of additional steps may be applied to the dealcoholized cannabis infused beverage 50 or to the dealcoholized beverage 22. Potassium metabisulfite, Velcorin, or any suitable antimicrobial additives may be added in amounts selected to kill mold and bacteria, and prevent growth of these organisms. Tartaric acid, malic acid or other additives may be added to adjust the flavor or pH of the dealcoholized cannabis infused beverage 50, and CO₂ may be added to adjust the mouth feel of the beverage. The dealcoholized cannabis infused beverage 50 may be flash pasteurized to help with shelf stabilization. In one approach, flash pasteurization may include heating the dealcoholized cannabis infused beverage 50 to 190 °F for 20 seconds the immediately dropped down to 39 °F. A temperatures of 190 °F may be high enough to kill any mold or bacteria in the liquid, while minimizing volatilization of terpenoids.

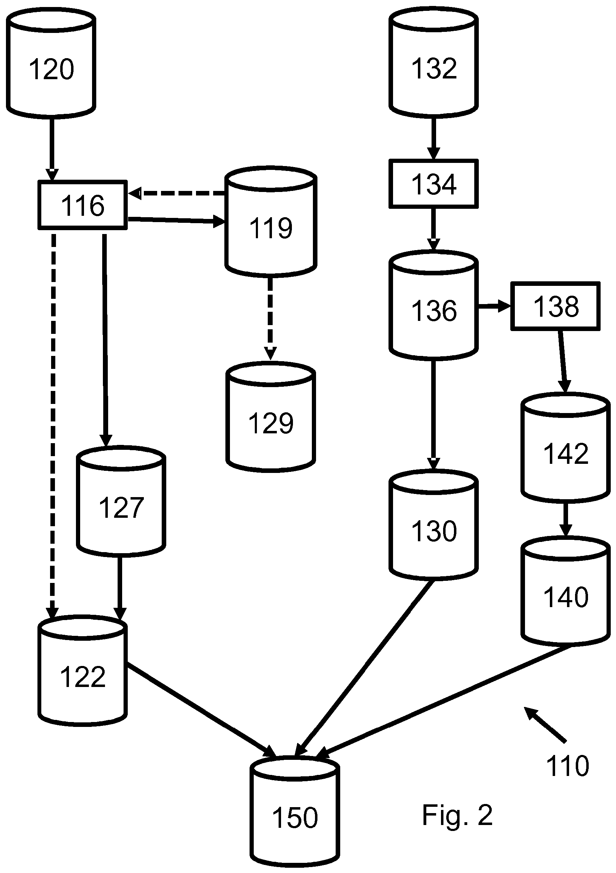

Fig. 2 shows a schematic of a system 110 for preparing the cannabis infused beverage 150. The dealcoholized cannabis infused beverage 150 is prepared from the dealcoholized beverage 122, and in addition to the phytocannabinoid preparation 130, includes a separate entourage preparation 140. The entourage preparation 140 may contribute to the aroma, flavor and effects of the cannabis infused dealcoholized beverage 150.

The system 10 includes the reverse osmosis filter 12 and the vertical still 14. In contrast, the system 110 includes a spinning cone system 116. The alcoholic beverage 120 may be dealcoholized through the spinning cone system 116, in which the alcoholic beverage 120 flows through a column including spinning and static disks on the spinning cone system 116. The column of the spinning cone system 116 may be under vacuum to limit oxygen being introduced to the alcoholic beverage 120. As the alcoholic beverage 120 flows over the disks of the spinning cone system 116 at a first speed of the spinning cones (shown with solid lines), terpenoids and other volatile compounds that carry all the aromas and flavors are condensed into a flavor fraction 127, resulting in a processed alcoholic beverage 119. The processed alcoholic beverage 119 is then passed through the spinning cone system 116 again with the cones spinning at a second speed (shown with dashed lines), which removes an ethanol fraction 129, resulting in the dealcoholized beverage 122. The flavor fraction 127 is then added back into the dealcoholized beverage 122. The first speed is lower than the second speed.

The phytocannabinoid preparation 130 may be added separately or at the same step as the entourage preparation 140. The entourage preparation 140 may include terpenoids, phenylpropanoids, or other chemicals found in *C*. *sativa* trichomes other than phytocannabinoids. The entourage preparation 140 includes a terpenoid preparation 142 that may be extracted from the same *C*. *sativa* plant matter 132 as the phytocannabinoid preparation 130, and may be recovered from a downstream distillation unit 138 applied to the cannabis extract 136. The same distillation unit 138 may be applied to the cannabis extract 136 to provide the phytocannabinoid preparation 130.

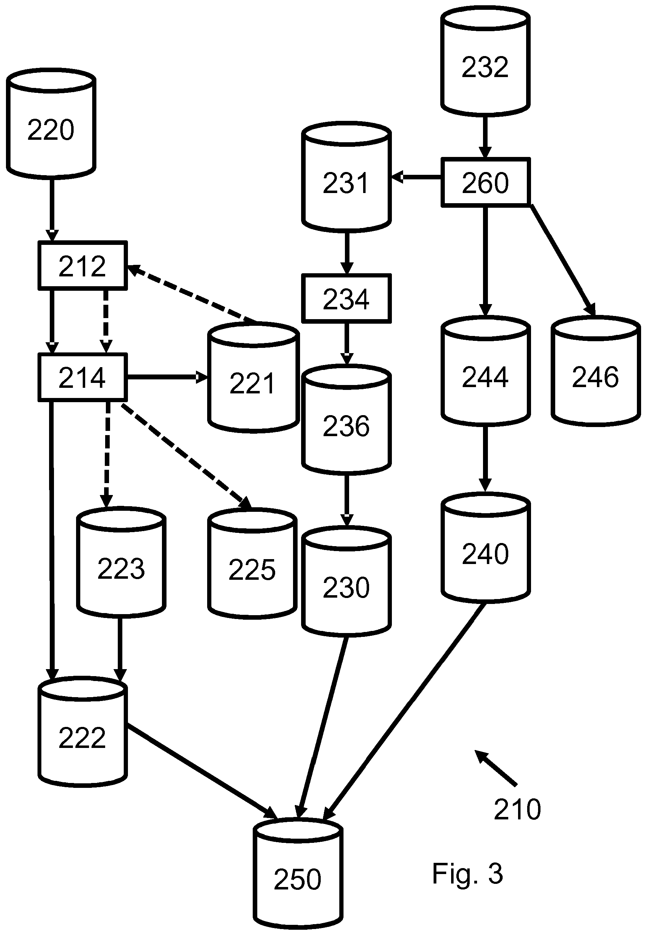

Fig. 3 shows a schematic of a system 210 for preparing the dealcoholized cannabis infused beverage 250.

The system 210 includes a steam distillation unit 260. The *C*. *sativa* plant matter 232 may be run through the steam distillation unit 260, resulting in a cannabis infused steam that includes cannabis essential oil 244 and a cannabis hydrosol 246. The cannabis infused steam is condensed into the essential oil 244 and the cannabis hydrosol 246. Steamed *C*. *sativa* plant matter 231 remains after being steamed. In the steam distillation unit 260, the *C*. *sativa* plant matter 232 is located above a boiler, steam flows through the *C*. *sativa* plant matter 232, and the steam is condensed into the cannabis essential oil 244 and the cannabis hydrosol 246. The cannabis essential oil 244 is a hydrophobic layer that will form on top of the cannabis hydrosol 246. The cannabis essential oil 244 may be biased towards more lipophilic molecules that were present in the *C*. *sativa* plant matter 232 than the cannabis hydrosol 246. The cannabis essential oil 244 may be included in the entourage preparation 240. After passing through the steam distillation unit 260, the steamed *C*. *sativa* plant matter 231 may be added to the extraction unit 234 and the phytocannabinoid preparation 230 may be prepared from the resulting cannabis extract 236. *C. sativa* plant matter other than the steamed *C. sativa* plant matter 231 may be added to the extraction unit 234 in addition to or instead of the steamed *C*. *sativa* plant matter 231.

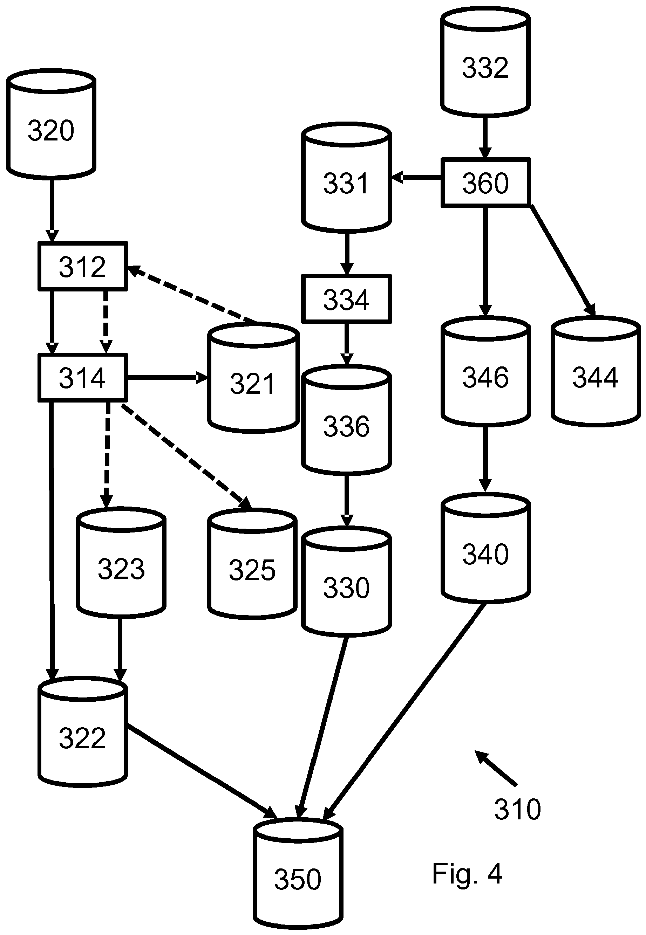

Fig. 4 (a reference figure, not within the scope of the invention) shows a schematic of a system 310 for preparing the dealcoholized cannabis infused beverage 350. The alcoholic beverage 320 may be dealcoholized, providing a dealcoholized beverage 322. The alcoholic beverage 320 may be passed through the reverse osmosis filter 312 and the vertical still 314 (shown in solid lines), resulting in precipitate 321 and the dealcoholized beverage 322. The precipitate 321 may be passed through the reverse osmosis filter 312 and the vertical still 314 to recover some of the flavonoids, terpenoids and other components of the alcoholic beverage 320 that were captured in the precipitate 321 and that contribute to the flavor and aroma of the alcoholic beverage 320. Applying the reverse osmosis filter 312 and the vertical still 314 to the precipitate 321 (shown in dashed lines) results in recaptured material 323 and the purified precipitate 325. The recaptured material 323 may include flavors and terpenoids that were captured in the precipitate 321.

The system 310 includes the steam distillation unit 360. The *C*. *sativa* plant matter 332 may be run through the steam distillation unit 360, resulting in a cannabis infused steam that includes the cannabis essential oil 344 and the cannabis hydrosol 346. The cannabis infused steam is condensed into the essential oil 344 and the cannabis hydrosol 346. Steamed *C*. *sativa* plant matter 331 remains after being steamed. In the steam distillation unit 360, the *C*. *sativa* plant matter 332 is located above a boiler, steam flows through the *C*. *sativa* plant matter 332, and the steam is condensed into the cannabis essential oil 344 and the cannabis hydrosol 346. The cannabis essential oil 344 is a hydrophobic layer that will form on top of the cannabis hydrosol 346. The cannabis hydrosol 346 may be biased towards less lipophilic molecules that were present in the *C*. *sativa* plant matter 332 than the essential oil 344. The cannabis hydrosol 346 may be included in the entourage preparation 340. After passing through the steam distillation unit 360, the steamed *C*. *sativa* plant matter 331 may be added to the extractor 334 and the phytocannabinoid preparation 330 may be prepared from the resulting cannabis extract 336. *C*. *sativa* plant matter other than the steamed *C*. *sativa* plant matter 331 may be added to the extraction unit 334 in addition to or instead of the steamed *C*. *sativa* plant matter 331.

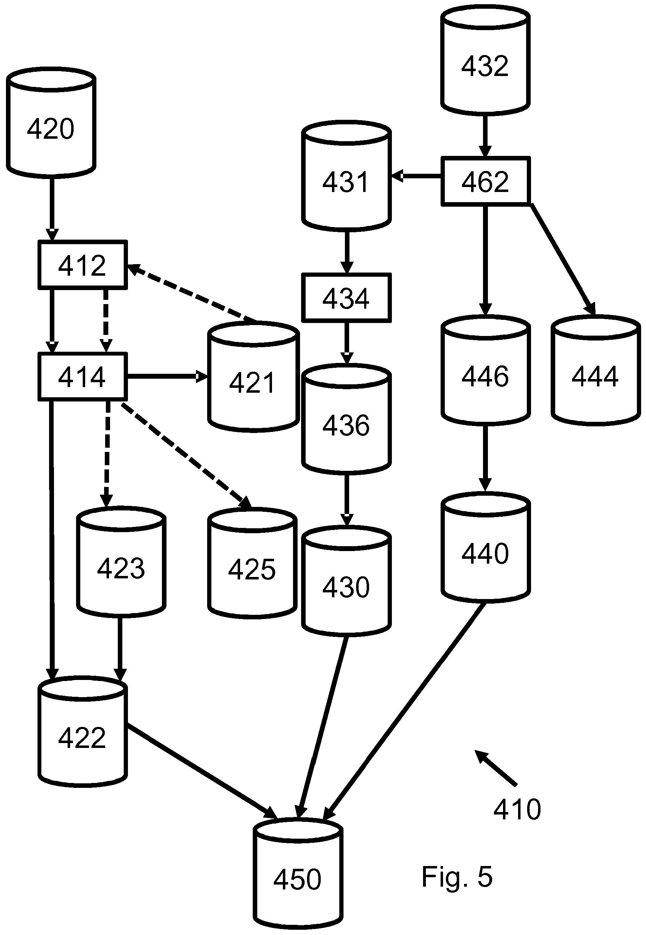

Fig. 5 (a reference figure, not within the scope of the invention) shows a schematic of a system 410 for preparing the dealcoholized cannabis infused beverage 450. The alcoholic beverage 420 may be dealcoholized, providing a dealcoholized beverage 422. The alcoholic beverage 420 may be passed through the reverse osmosis filter 412 and the vertical still 414 (shown in solid lines), resulting in precipitate 421 and the dealcoholized beverage 422. The precipitate 421 may be passed through the reverse osmosis filter 412 and the vertical still 414 to recover some of the flavonoids, terpenoids and other components of the alcoholic beverage 420 that were captured in the precipitate 421 and that contribute to the flavor and aroma of the alcoholic beverage 420. Applying the reverse osmosis filter 412 and the vertical still 414 to the precipitate 421 (shown in dashed lines) results in recaptured material 423 and the purified precipitate 425. The recaptured material 423 may include flavors and terpenoids that were captured in the precipitate 421.

A steam infusion unit 462 may be applied in which the *C*. *sativa* plant matter 432 is located in a boiler, and the *C. sativa* plant matter 432 is boiled. The resulting cannabis infused steam is condensed into the cannabis essential oil 444 and the cannabis hydrosol 446. The cannabis hydrosol 446 may be included in the entourage preparation 440. Steamed *C*. *sativa* plant matter 431 remains in the steam infusion unit 462 after being steamed. The cannabis essential oil 444 is a hydrophobic layer that will form on top of the cannabis hydrosol 446. The cannabis essential oil 444 may be biased towards more lipophilic molecules that were present in the *C*. *sativa* plant matter 432 than the cannabis hydrosol 446. The cannabis essential oil 444 may be included in the entourage preparation 440. After passing through the steam infusion unit 462, the steamed *C*. *sativa* plant matter 431 may be added to the extractor 434 and the phytocannabinoid preparation 430 may be prepared from the resulting cannabis extract 436. *C*. *sativa* plant matter other than the steamed *C*. *sativa* plant matter 431 may be added to the extraction unit 434 in addition to or instead of the steamed *C*. *sativa* plant matter 431.

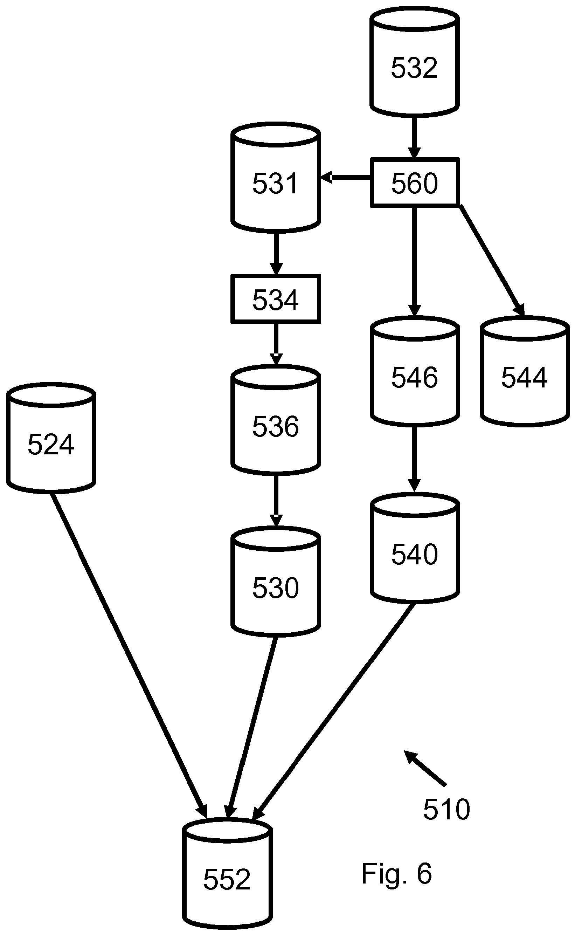

Fig. 6 (a reference figure, not within the scope of the invention) shows a schematic of a system 571 for preparing a non-alcoholic cannabis infused beverage 552. Water, fruit juice, coffee, tea, or other base beverages 524 may be combined with the phytocannabinoid preparation 530 and the cannabis hydrosol 546 to provide a cannabis infused beverage. The base beverage 524 may be combined with the phytocannabinoid preparation 530. The cannabis hydrosol 546 may include a similar profile of phytocannabinoids, terpenoids and phenylpropanoids as the *C*. *sativa* plant matter 532 that was exposed to the steam, and the profile may be skewed toward the more volatile chemicals and the more water-soluble chemicals found in the *C*. *sativa* plant matter 532. The cannabis hydrosol 546 may contribute to the aroma, flavor and effect of the non-alcoholic cannabis infused beverage 552.

The system 510 includes the steam distillation unit 560. The *C*. *sativa* plant matter 532 may be run through the steam distillation unit 560, resulting in a cannabis infused steam that includes the cannabis essential oil 544 and the cannabis hydrosol 546. The cannabis infused steam is condensed into the essential oil 544 and the cannabis hydrosol 546. Steamed *C*. *sativa* plant matter 531 remains after being steamed. In the steam distillation unit 560, the *C*. *sativa* plant matter 532 is located above a boiler, steam flows through the *C*. *sativa* plant matter 532, and the steam is condensed into the cannabis essential oil 544 and the cannabis hydrosol 546. The cannabis essential oil 544 is a hydrophobic layer that will form on top of the cannabis hydrosol 546. The cannabis essential oil 544 may be biased towards more lipophilic molecules that were present in the *C*. *sativa* plant matter 532 than the cannabis hydrosol 546. The cannabis essential oil 544 may be included in the entourage preparation 540. After passing through the steam distillation unit 560, the steamed *C*. *sativa* plant matter 531 may be added to the extractor 534 and the phytocannabinoid preparation 530 may be prepared from the resulting cannabis extract 536. *C*. *sativa* plant matter other than the steamed *C*. *sativa* plant matter 531 may be added to the extraction unit 534 in addition to or instead of the steamed *C*. *sativa* plant matter 531.

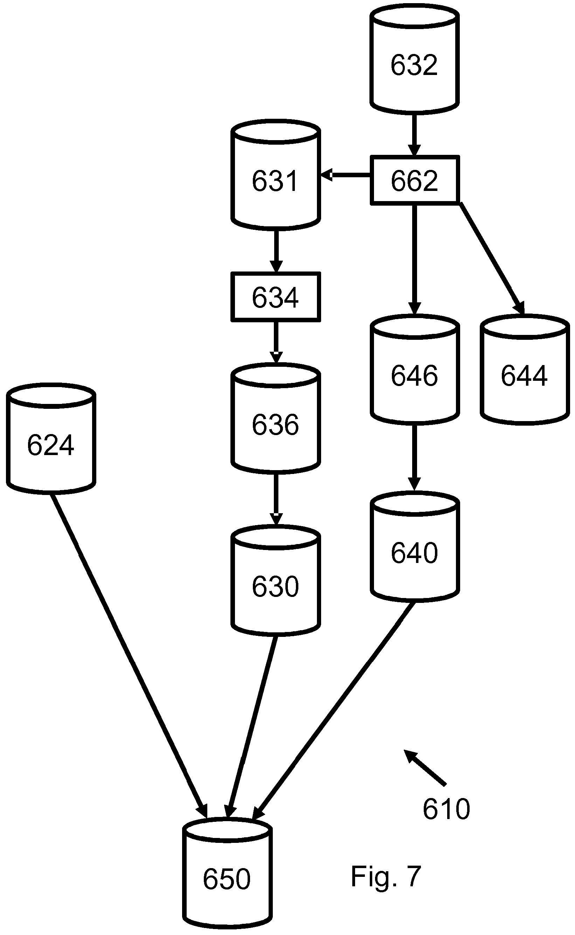

Fig. 7 shows a schematic of a system 671 for preparing the non-alcoholic cannabis infused beverage 652. The steam infusion unit 662 may be applied in which the *C*. *sativa* plant matter 632 is located in a boiler, and the *C. sativa* plant matter 632 boiled. The resulting steam may be condensed into the cannabis essential oil 644 and the cannabis hydrosol 646. The cannabis hydrosol 646 may be included in the entourage preparation 640.

The steam infusion unit 662 may be applied in which the *C*. *sativa* plant matter 632 is located in a boiler, and the *C*. *sativa* plant matter 632 is boiled. The resulting cannabis infused steam is condensed into the cannabis essential oil 644 and the cannabis hydrosol 646. The cannabis hydrosol 646 may be included in the entourage preparation 640. Steamed *C*. *sativa* plant matter 631 remains in the steam infusion unit 662 after being steamed. The cannabis essential oil 644 is a hydrophobic layer that will form on top of the cannabis hydrosol 646. The cannabis essential oil 644 may be biased towards more lipophilic molecules that were present in the *C*. *sativa* plant matter 632 than the cannabis hydrosol 646. The cannabis essential oil 644 may be included in the entourage preparation 640. After passing through the steam infusion unit 662, the steamed *C*. *sativa* plant matter 631 may be added to the extractor 634 and the phytocannabinoid preparation 630 may be prepared from the resulting cannabis extract 636. *C*. *sativa* plant matter other than the steamed *C*. *sativa* plant matter 631 may be added to the extraction unit 634 in addition to or instead of the steamed *C*. *sativa* plant matter 631.

## Claims

1. A method of preparing a cannabis infused beverage comprising:
providing a beverage;
providing a phytocannabinoid preparation; and
introducing the phytocannabinoid preparation into the beverage to provide the cannabis infused beverage;
**characterized in that** the beverage is a dealcoholized beverage, wherein providing the dealcoholized beverage comprises:
providing an alcoholic beverage; and
applying a spinning cone process to the alcoholic beverage for removing alcohol from the alcoholic beverage.

2. The method of claim 1 further comprising:
recovering a processed alcoholic beverage from the spinning cone process;
applying the spinning cone process to the processed alcoholic beverage, resulting in flavor fraction comprising flavonoids; and
introducing the flavor fraction into the cannabis infused beverage, preferably wherein introducing the flavor fraction into the cannabis infused beverage comprises introducing the flavor fraction to the dealcoholized beverage.

3. The method of any one of claims 1 to 2 wherein the phytocannabinoid preparation comprises a phytocannabinoid distillate.

4. The method of any one of claims 1 to 3 wherein the phytocannabinoid preparation comprises terpenoids, and preferably:
wherein the phytocannabinoid preparation comprises phytocannabinoids and terpenoids extracted from a single plant source, and preferably the single plant source comprises plant matter from a single clonal strain or stable variety of *Cannabis sativa,* and/or
the phytocannabinoid preparation comprises a cannabis hydrosol, preferably wherein the cannabis hydrosol is prepared according to a method comprising:
providing cannabis plant matter
exposing the cannabis plant matter to steam, resulting in infused steam;
condensing the infused steam, resulting in cannabis essential oil and cannabis hydrosol; and
recovering the cannabis hydrosol, preferably wherein exposing the cannabis plant matter to the steam comprises locating the cannabis plant matter in a flow path of the steam or boiling the cannabis plant matter in water.

5. The method of any one of claims 1 to 4 wherein the phytocannabinoid preparation comprises an emulsion.

6. The method of any one of claims 1 to 5 further comprising introducing an entourage preparation into the dealcoholized beverage to provide the cannabis infused beverage, the entourage preparation comprising terpenoids, and preferably:
the entourage preparation comprises an extract from *C*. *sativa*; and/or
the entourage preparation comprises a cannabis essential oil; and/or
the entourage preparation comprises a cannabis hydrosol, preferably wherein the cannabis hydrosol is prepared according to a method comprising:
providing cannabis plant matter
exposing the cannabis plant matter to steam, resulting in infused steam;
condensing the infused steam, resulting in cannabis essential oil and cannabis hydrosol; and
recovering the cannabis hydrosol; preferably wherein exposing the cannabis plant matter to the steam comprises locating the cannabis plant matter in a flow path of the steam or boiling the cannabis plant matter in water; and/or the terpenoids are sourced from a plant other than from *Cannabis sativa*; and/or the terpenoids are synthetic

7. The method of any one of claims 1 to 6 comprising adding tartaric acid or malic acid to the cannabis infused beverage for adjusting the flavor or pH of the cannabis infused beverage.

8. The method of claim 1 to 7 comprising adding tartaric acid or malic acid to the dealcoholized beverage for adjusting the flavor or pH of the cannabis infused beverage.

9. A cannabis infused beverage prepared according to the method of any one of claims 1 to 8.

10. A system for preparing a cannabis infused beverage according to the method of any one of claims 1 to 8.

## Patentansprüche

1. Verfahren zur Zubereitung eines mit Cannabis infundierten Getränks, umfassend:
Bereitstellen eines Getränks;
Bereitstellen einer Phytocannabinoid-Zubereitung; und
Einbringen der Phytocannabinoid-Zubereitung in das Getränk, um das mit Cannabis infundierte Getränk bereitzustellen;
**dadurch gekennzeichnet, dass** das Getränk ein entalkoholisiertes Getränk ist, wobei Bereitstellen des entalkoholisierten Getränks umfasst:
Bereitstellen eines alkoholischen Getränkes; und
Anwenden eines Spinnkegelprozesses auf das alkoholische Getränk zur Entfernung von Alkohol aus dem alkoholischen Getränk.

2. Verfahren nach Anspruch 1, ferner umfassend:
Rückgewinnen eines verarbeiteten alkoholischen Getränks aus dem Spinnkegelprozess;
Anwenden des Spinnkegelprozesses auf das verarbeitete alkoholische Getränk, wodurch eine Flavonoide umfassende Aromafraktion entsteht; und
Einbringen der Aromafraktion in das mit Cannabis infundierte Getränk, wobei Einbringen der Aromafraktion in das mit Cannabis infundierte Getränk vorzugsweise Einbringen der Aromafraktion in das entalkoholisierte Getränk umfasst.

3. Verfahren nach einem der Ansprüche 1 bis 2, wobei die Phytocannabinoid-Zubereitung ein Phytocannabinoid-Destillat umfasst.

4. Verfahren nach einem der Ansprüche 1 bis 3, wobei die Phytocannabinoid-Zubereitung Terpenoide umfasst und wobei vorzugsweise:
die Phytocannabinoid-Zubereitung Phytocannabinoide und Terpenoide umfasst, die aus einer einzigen pflanzlichen Quelle extrahiert werden, und wobei vorzugsweise die einzelne pflanzliche Quelle Pflanzenmaterial aus einem einzigen klonalen Stamm oder einer stabilen Sorte von Cannabis sativa umfasst, und/oder
die Phytocannabinoid-Zubereitung ein Cannabis-Hydrosol umfasst, wobei das Cannabis-Hydrosol vorzugsweise nach einem Verfahren zubereitet wird, das Folgendes umfasst:
Bereitstellen von Cannabis-Pflanzenmaterial,
Einwirken von Dampf auf das Cannabis-Pflanzenmaterial, was zu infundiertem Dampf führt;
Kondensieren des infundierten Dampfes, was zu ätherischem Cannabis-Öl und Cannabis-Hydrosol führt; und
Rückgewinnen des Cannabis-Hydrosols, wobei vorzugsweise Einwirkung des Dampfes auf das Cannabis-Pflanzenmaterial umfasst, dass das Cannabis-Pflanzenmaterial in einem Strömungsweg des Dampfes untergebracht wird oder das Cannabis-Pflanzenmaterial in Wasser gesiedet wird.

5. Verfahren nach einem der Ansprüche 1 bis 4, wobei die Phytocannabinoid-Zubereitung eine Emulsion umfasst.

6. Verfahren nach einem der Ansprüche 1 bis 5, ferner umfassend Einbringen einer Begleitzubereitung in das entalkoholisierte Getränk zum Bereitstellen des mit Cannabis infundierten Getränkes, wobei die Begleitzubereitung Terpenoide umfasst, und vorzugsweise:
die Begleitzubereitung einen Extrakt aus C. sativa umfasst; und/oder
die Begleitzubereitung ein ätherisches Cannabis-Öl umfasst; und/oder
die Begleitzubereitung ein Cannabis-Hydrosol umfasst, wobei das Cannabis-Hydrosol vorzugsweise nach einem Verfahren zubereitet wird, das Folgendes umfasst:
Bereitstellen von Cannabis-Pflanzenmaterial,
Einwirken von Dampf auf das Cannabis-Pflanzenmaterial, was zu infundiertem Dampf führt;
Kondensieren des infundierten Dampfes, was zu ätherischem Cannabis-Öl und Cannabis-Hydrosol führt; und
Rückgewinnen des Cannabis-Hydrosols, wobei vorzugsweise Einwirken des Dampfes auf das Cannabis-Pflanzenmaterial umfasst, dass das Cannabis-Pflanzenmaterial in einem Strömungsweg des Dampfes untergebracht wird oder das Cannabis-Pflanzenmaterial in Wasser gesiedet wird; und/oder
wobei die Terpenoide von einer anderen Pflanze als Cannabis sativa stammen; und/oder
die Terpenoide synthetisch sind.

7. Verfahren nach einem der Ansprüche 1 bis 6, umfassend Zugeben von Weinsäure oder Apfelsäure zu dem mit Cannabis infundierten Getränk zur Einstellung des Aromas oder pH-Werts des mit Cannabis infundierten Getränks.

8. Verfahren nach Anspruch 1 bis 7, umfassend Zugeben von Weinsäure oder Apfelsäure zu dem entalkoholisierten Getränk zur Einstellung des Aromas oder pH-Wertes des mit Cannabis infundierten Getränks.

9. Mit Cannabis infundiertes Getränk, das nach dem Verfahren nach einem der Ansprüche 1 bis 8 zubereitet wird.

10. System zur Zubereitung eines mit Cannabis infundierten Getränks nach dem Verfahren gemäß einem der Ansprüche 1 bis 8.

## Revendications

1. Procédé de préparation d'une boisson infusée de cannabis comprenant :
fourniture d'une boisson ;
fourniture d'une préparation de phytocannabinoïdes ; et
introduction de la préparation de phytocannabinoïdes dans la boisson pour fournir la boisson infusée de cannabis ;
**caractérisé en ce que** la boisson est une boisson désalcoolisée, la fourniture de la boisson désalcoolisée comprenant :
fourniture d'une boisson alcoolisée ; et
application d'un procédé à cône de filage à la boisson alcoolisée pour éliminer l'alcool de la boisson alcoolisée.

2. Procédé selon la revendication 1, comprenant en outre :
récupération d'une boisson alcoolisée transformée du procédé à cône de filage ;
application du procédé à cône de filage à la boisson alcoolisée transformée, résultant en une fraction aromatisante comprenant des flavonoïdes ; et
introduction de la fraction aromatisante dans la boisson infusée de cannabis, de préférence dans lequel l'introduction de la fraction aromatisante dans la boisson infusée de cannabis comprend l'introduction de la fraction aromatisante dans la boisson désalcoolisée.

3. Procédé selon l'une quelconque des revendications 1 à 2, dans lequel la préparation de phytocannabinoïdes comprend un distillat de phytocannabinoïdes.

4. Procédé selon l'une quelconque des revendications 1 à 3, dans lequel la préparation de phytocannabinoïdes comprend des terpénoïdes, et de préférence :
dans lequel la préparation de phytocannabinoïdes comprend des phytocannabinoïdes et des terpénoïdes extraits d'une seule source végétale, et de préférence la seule source végétale comprend une matière végétale provenant d'une seule souche clonale ou d'une variété stable de Cannabis sativa, et/ou
la préparation de phytocannabinoïdes comprend un hydrosol de cannabis, de préférence l'hydrosol de cannabis étant préparé selon un procédé comprenant :
fourniture d'une matière végétale de cannabis exposition de la matière végétale de cannabis à de la vapeur, résultant en de la vapeur infusée ;
condensation de la vapeur infusée, résultant en une huile essentielle de cannabis et un hydrosol de cannabis ; et
récupération de l'hydrosol de cannabis, de préférence l'exposition de la matière végétale de cannabis à la vapeur comprenant le placement de la matière végétale de cannabis dans un trajet d'écoulement de la vapeur ou le fait de faire bouillir la matière végétale de cannabis dans de l'eau.

5. Procédé selon l'une quelconque des revendications 1 à 4, dans lequel la préparation de phytocannabinoïdes comprend une émulsion.

6. Procédé selon l'une quelconque des revendications 1 à 5, comprenant en outre l'introduction d'une préparation d'entourage dans la boisson désalcoolisée pour fournir la boisson infusée de cannabis, la préparation d'entourage comprenant des terpénoïdes, et de préférence :
la préparation d'entourage comprend un extrait de C. sativa ; et/ou
la préparation d'entourage comprend une huile essentielle de cannabis ; et/ou
la préparation d'entourage comprend un hydrosol de cannabis, de préférence l'hydrosol de cannabis étant préparé selon un procédé comprenant :
fourniture d'une matière végétale de cannabis exposition de la matière végétale de cannabis à de la vapeur, résultant en de la vapeur infusée ;
condensation de la vapeur infusée, résultant en une huile essentielle de cannabis et un hydrosol de cannabis ; et
récupération de l'hydrosol de cannabis, de préférence l'exposition de la matière végétale de cannabis à la vapeur comprenant le placement de la matière végétale de cannabis dans un trajet d'écoulement de la vapeur ou le fait de faire bouillir la matière végétale de cannabis dans de l'eau ; et/ou
les terpénoïdes proviennent d'une plante autre que Cannabis sativa ; et/ou
les terpénoïdes sont synthétiques.

7. Procédé selon l'une quelconque des revendications 1 à 6, comprenant l'ajout d'acide tartrique ou d'acide malique à la boisson infusée de cannabis pour ajuster la saveur ou le pH de la boisson infusée de cannabis.

8. Procédé selon les revendications 1 à 7, comprenant l'ajout d'acide tartrique ou d'acide malique à la boisson désalcoolisée pour ajuster la saveur ou le pH de la boisson infusée de cannabis.

9. Boisson infusée de cannabis préparée selon le procédé de l'une quelconque des revendications 1 à 8.

10. Système pour préparer une boisson infusée de cannabis selon le procédé de l'une quelconque des revendications 1 à 8.
